# EUROPEAN PATENT SPECIFICATION

(11) **EP 1 504 513 B1**
(45) Date of publication and mention of the grant of the patent: **19.05.2010**
(21) Application number: 03723251.9
(22) Date of filing: 08.05.2003
(51) Int. Cl.: H02J 1/10, H02M 7/17

(54) **INDOOR POWER DISTRIBUTION SYSTEM**
INNENRAUM-STROMVERTEILUNGSSYSTEM
SYSTEME DE DISTRIBUTION DE COURANT INTERNE

(30) Priority: 13.05.2002 JP 2002137510
(43) Date of publication of application: 09.02.2005
(73) Proprietor: Nitta Corporation, Osaka-shi, Osaka 556-0022 (JP)
(72) Inventor: WANG, Guo-Hua, c/o NITTA CORPORATION Nara Plant, Yamatokohriyama-shi, Nara 639-1032 (JP)
(74) Representative: Sajda, Wolf E.
(86) International application number: PCT/JP2003/005739
(87) International publication number: WO 2003/096510

(56) References cited:
- DE-C- 19 750 041
- US-A- 6 031 745

## Description

### TECHNICAL FIELD

The present invention relates to an indoor power distribution system that provides electric power supply to a plurality of loads.

### PRIOR ART

In recent years, an increasing number of loads with built-in rectifying circuits such as personal computers, audio video equipment, etc. are being used in offices and homes. These loads with built-in rectifying circuits have characteristics that allow large electric currents to flow when the instantaneous values of voltage are high. Connection of a large number of such loads could result in distortion of the voltage waveform.

In addition, because the loads each having a built-in rectifying circuit including an inverter operate at high switching frequencies, electromagnetic waves are generated and radiated, causing electromagnetic interference on other electric and electronic equipment. Such a prior art power distribution system is disclosed in document US 6 031 745.

It is a primary object of the present invention to provide an indoor power distribution system that is less prone to waveform distortion and electromagnetic interference.

### DISCLOSURE OF THE INVENTION

The reference symbols used to denote the elements recited below correspond to the reference symbols used in the section of BEST MODE FOR CARRYING OUT THE INVENTION.

An indoor power distribution system according to the present invention comprises an AC (alternating current) power supply 4 that operates at a commercial frequency, a second capacitor C2, a plurality of parallel-connection type controlled switching circuits A, A,... which are each connected in series with the AC power supply 4, and loads connected to the respective parallel-connection type controlled switching circuits A, A,..., wherein each of the parallel-connection type controlled switching circuits A is a circuit comprising a first capacitor C1 and a switch 2 connected in parallel with each other; the loads are each connected in parallel with the first capacitor C1; and each of the parallel-connection type controlled switching circuits A includes a control circuit 1 which controls the switch 2 to close when the voltage applied to the load becomes higher than a first predetermined value, and to open when the voltage applied to the load becomes lower than a second predetermined value that is lower than the first predetermined value(Claim 1).

According to the system, when the parallel-connection type controlled switching circuits are operated with the respective loads connected thereto, each of the loads can be efficiently provided with power supply of a predetermined voltage. In addition, since the switches are operated at a commercial frequency, when compared with high frequency switching power supply circuits, high frequency voltage and high frequency current generated at turn on and turn off of the switches can be reduced, and electromagnetic interference can thus be prevented.

Furthermore, owing to the function of the second capacitor as a current-limiting impedance element, it is possible to mitigate the phenomenon of excessive current flow causing distortion of the voltage waveform that occurs when the instantaneous value of the supply voltage is high.

Another indoor power distribution system according to the present invention comprises an AC power supply 4 that operates at a commercial frequency, a plurality of series-connection type controlled switching circuits B, B,... which are each connected in parallel with the AC power supply 4, and loads connected to the respective series-connection type controlled switching circuits B, B,..., wherein each of the series-connection type controlled switching circuits B is a circuit comprising a second capacitor C2, a switch 2 and a first capacitor C1 that are connected in series with one another; the loads are each connected in parallel with the first capacitor C1; and each of the series-connection type controlled switching circuits B includes a control circuit 1 which controls the switch 2 to open when the voltage applied to the load becomes higher than a first predetermined value, and to close when the voltage applied to the load becomes lower than a second predetermined value that is lower than the first predetermined value (Claim 2). With this indoor power distribution system, the same operational advantages as those described above can be achieved.

Still another indoor power distribution system according to the present invention comprises an AC power supply 4 that operates at a commercial frequency, a plurality of parallel-connection type controlled switching circuits A', A',... which are each connected in parallel with the AC power supply 4, and loads connected to the respective parallel-connection type controlled switching circuits A', A',..., wherein each of the parallel-connection type controlled switching circuits A' is a circuit comprising a first capacitor C1, a switch 2 connected in parallel with the first capacitor C1, and a second capacitor C2 connected in series therewith; the loads are each connected in parallel with the first capacitor C1; and each of the parallel-connection type controlled switching circuits A' includes a control circuit 1 which controls the switch 2 to close when the voltage applied to the load becomes higher than a first predetermined value, and to open when the voltage applied to the load becomes lower than a second predetermined value that is lower than the first predetermined value (Claim 3). Also with this indoor power distribution system, the same operational advantages as those described above can be achieved.

When zero-cross switches are used as the switches above, it is further possible to suppress harmonic noise and prevent inrush current.

In the case of loads that require a DC (direct current) power supply, a rectifying circuit for providing DC power supply to the load may be interposed between the switch and the first capacitor.

### BRIEF DESCRIPTION OF THE DRAWINGS

Fig.1 is a wiring diagram of an indoor power distribution system according to the present invention.
Fig. 2 shows an operating characteristic of a control circuit 1 in the indoor power distribution system of Fig. 1.
Fig. 3 (a) is a waveform diagram of a voltage V2 in the indoor power distribution system of Fig. 1.
Fig. 3 (b) is a waveform diagram of a voltage V1 in the indoor power distribution system of Fig. 1.
Fig.4 is a wiring diagram of an indoor power distribution system according to another embodiment of the present invention.
Fig. 5 shows an operating characteristic of a control circuit 1 in the indoor power distribution system of Fig. 4.
Fig. 6 (a) is a waveform diagram of a voltage V2 in the indoor power distribution system of Fig. 4.
Fig. 6 (b) is a waveform diagram of a voltage V1 in the indoor power distribution system of Fig. 4.
Fig. 7 is a wiring diagram of an indoor power distribution system according to still another embodiment of the present invention.
Fig. 8 shows an operating characteristic of a control circuit 1 in the indoor power distribution system of Fig. 7.
Fig. 9 (a) is a waveform diagram of a voltage V2 in the indoor power distribution system of Fig. 7.
Fig. 9(b) is a waveform diagram of a voltage V1 in the indoor power distribution system of Fig. 7.

### BEST MODE FOR CARRYING OUT THE INVENTION

### <Indoor power distribution system 1>

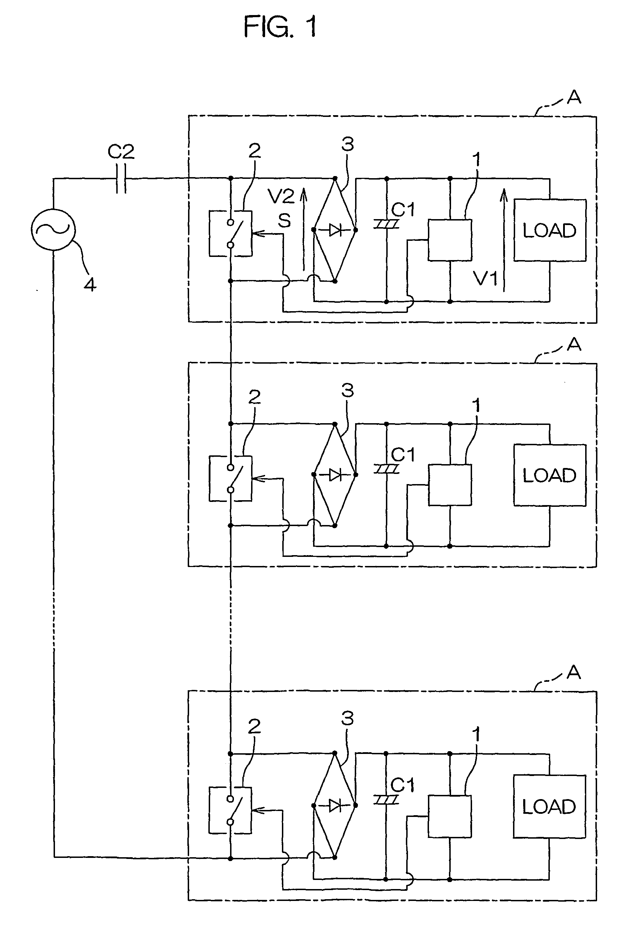

Fig. 1 is a wiring diagram of an indoor power distribution system according to the present invention. This indoor power distribution system comprises a plurality of parallel-connection type controlled switching circuits A, A,...that are connected in series with one another and are connected to an AC power supply through a series-connected capacitor C2. The installation position of the series-connected capacitor C2 may be between the AC power supply 4 and the parallel-connection type controlled switching circuits A as shown in Fig. 1, or alternatively, between one parallel-connection type controlled switching circuit A and another parallel-connection type controlled switching circuit A.

The "load" refers to a load that requires direct current such as personal computer, audio-video equipment or the like, or a load compatible with both alternating current and direct current such as heater, light bulb or the like.

The parallel-connection type controlled switching circuit A comprises the combination of a parallel-connected zero-cross switch 2, a rectifying circuit 3 and a smoothing capacitor C1, and a load is connected to the smoothing capacitor C1 (See Japanese Unexamined Patent Publication No. H4-46565). Since the smoothing capacitor C1 is disposed posterior to the rectifying circuit 3, a polarized capacitor can be used for it. However, a non-polarized capacitor may also be used.

Switching of the zero-cross switch 2 is effected by the control circuit 1 provided in the parallel-connection type controlled switching circuit A.

The voltage of the smoothing capacitor C1, i.e., the voltage applied to the load is represented by V1, and the voltage applied to the input of the rectifying circuit 3 is represented by V2.

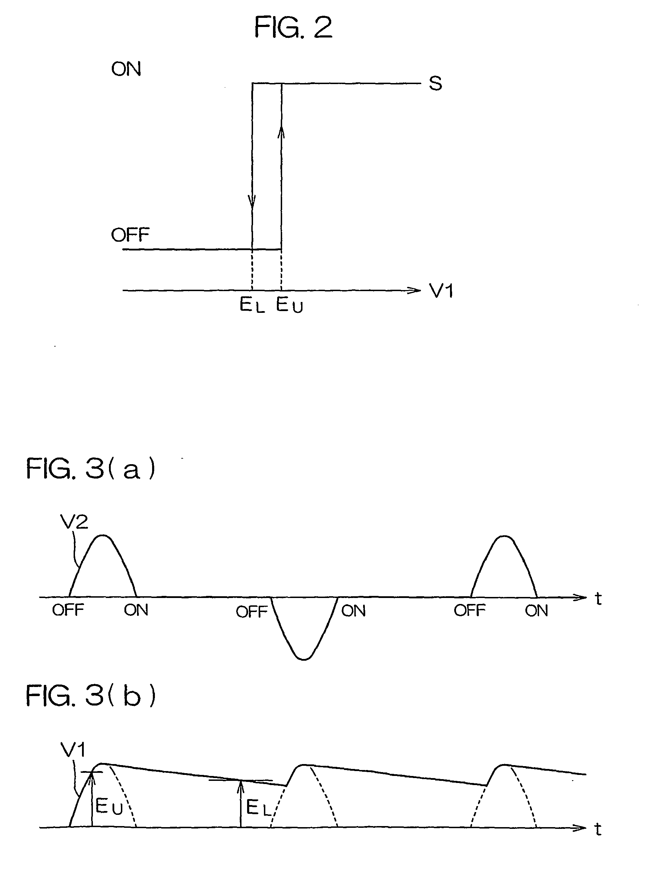

Fig. 2 shows an operating characteristic of the control circuit 1. The control circuit 1 has a hysteresis, which controls the zero-cross switch 2 to operate such that if the voltage V1 applied to the load becomes higher than a predetermined value EU at a time point, the zero-cross switch 2 closes (ON) at the first zero-cross point of the voltage V2 after the time point, and if the voltage V1 applied to the load becomes lower than a predetermined value EL (EL<EU) at a time point, the zero-cross switch 2 opens (OFF) at the first zero-cross point of the voltage V2 after the time point.

Fig. 3 (a) is a waveform diagram of the voltage V2 and Fig. 3 (b) is a waveform diagram of the voltage V1. The control circuit 1 controls the zero-cross switch 2 to operate such that if the voltage V1 applied to the load becomes higher than a predetermined value EU at a time point, the zero-cross switch 2 is turned on at the first zero-cross point of the voltage V2 after the time point. This causes the voltage V2 to be kept at 0 for a while after the zero-cross switch 2 is turned on. As a result, power supply to the smoothing capacitor C1 is stopped, causing the voltage V1 to drop. If the voltage V1 becomes lower than the predetermined value EL at a time point, the zero-cross switch 2 is turned off at the first zero-cross point of the voltage V2 after the time point. Power supply to the smoothing capacitor C1 is then resumed, so that the voltage V1 starts to increase.

By this control, the voltage V1 applied to the load can be maintained between the predetermined values EU and EL. Specific values to be set for the predetermined values EU and EL are determined according to the respective loads.

Because of the operation of the zero-cross switch 2, the impedance of the parallel-connection type controlled switching circuit A viewed from the AC power supply 4 varies temporally. It is 0 when the zero-cross switch 2 is on, and at a value that depends on the impedance of the load when the zero-cross switch 2 is off.

Accordingly, the impedance of the whole indoor power distribution system also varies temporally. If there is an instant at which all the zero-cross switches 2 happen to be turned on, at that instant, the impedance of the whole indoor power distribution system is the impedance of the series-connected capacitor C2, and the entire supply voltage is applied to the series-connected capacitor C2. If there is an instant at which all the zero-cross switches 2 happen to be turned off, at that instant, the impedance of the whole indoor power distribution system is at a maximum, and the voltage applied to the series-connected capacitor C2 is at a minimum.

In such a manner, the series-connected capacitor C2 absorbs the voltage applied to the whole indoor power distribution system.

In addition, the series-connected capacitor C2 functions as a current-limiting impedance element to keep the current constant. The current-limiting function of the series-connected capacitor C2 makes it possible to mitigate the phenomenon of excessive current in the power supply causing distortion of the voltage waveform that occurs when the instantaneous value of the supply voltage is high.

Since the zero-cross switches 2 are adapted to perform switching operation at a commercial frequency, when compared with switching power supplies that operate at high frequencies, high frequency voltage and high frequency current generated at turn on and turn off of the switches can be reduced. Generation of electromagnetic waves can therefore be suppressed, thereby preventing electromagnetic interference. Furthermore, inrush current can also be prevented owing to the switching at the zero-cross points.

### <Indoor power distribution system 2>

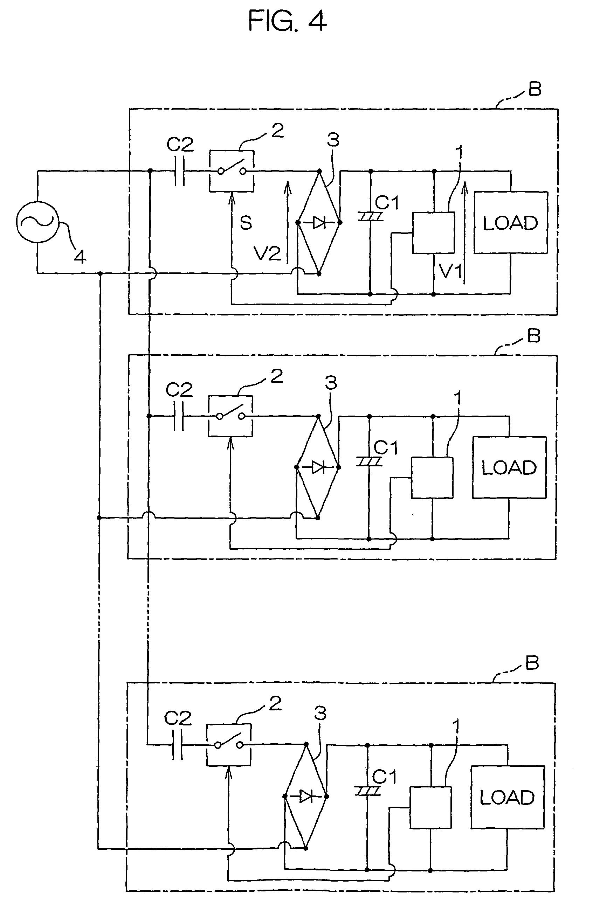

Fig. 4 is a wiring diagram of an indoor power distribution system according to another embodiment of the invention. This indoor power distribution system comprises a plurality of series-connection type controlled switching circuits B, B,...that are connected in parallel with an AC power supply 4.

Each of the series-connection type controlled switching circuits B comprises the combination of a series-connected capacitor C2, a series-connected zero-cross switch 2, a rectifying circuit 3, a smoothing capacitor C1 and a load. Switching of the zero-cross switch 2 is effected by a control circuit 1.

The voltage of the smoothing capacitor C1, i.e., the voltage applied to the load is represented by V1, and the voltage applied to the input of the rectifying circuit 3 is represented by V2.

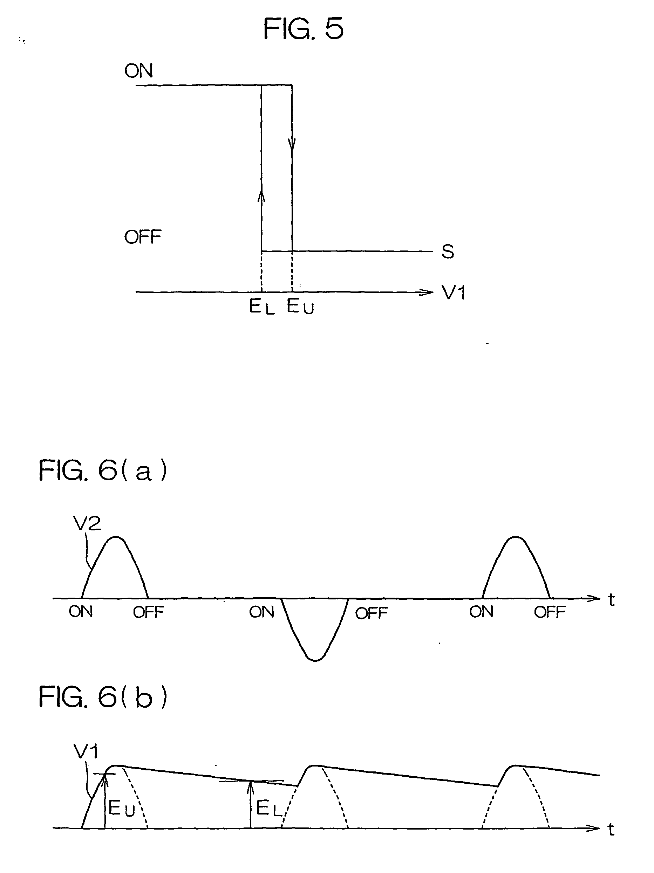

Fig. 5 shows an operating characteristic of the control circuit 1. The control circuit 1 controls the zero-cross switch 2 to operate such that if the voltage V1 applied to the load becomes higher than a predetermined value EU at a time point, the zero-cross switch 2 opens (OFF) at the first zero-cross point of the voltage V2 after the time point, and if the voltage V1 becomes lower than a predetermined value EL at a time point, the zero-cross switch 2 closes (ON) at the first zero-cross point of the voltage V2 after the time point.

Fig. 6 (a) is a waveform diagram of the voltage V2, and Fig. 6(b) is a waveform diagram of the voltage V1. If the voltage V1 applied to the load becomes higher than a predetermined value EU at a time point, the zero-cross switch 2 is turned off at the first zero-cross point of the voltage V2 after the time point. This causes the voltage V2 to be kept at 0 for a while. As a result, power supply to the smoothing capacitor C1 is stopped, causing the voltage V1 to drop. If the voltage V1 becomes lower than a predetermined value EL at a time point, the zero-cross switch 2 is turned on at the first zero-cross point of the voltage V2 after the time point. Power supply to the smoothing capacitor C1 is then resumed, so that the voltage V1 starts to increase.

By this control, the voltage V1 applied to the load can be maintained between the predetermined values EU and EL.

Because of the operation of the zero-cross switch 2, the impedance of the series-connection type controlled switching circuit B varies temporally. It is infinite when the zero-cross switch 2 is off, and at a value that depends on the impedances of the load and the series-connected capacitor C2 when the zero-cross switch 2 is on.

Accordingly, the impedance of the whole indoor power distribution system also varies temporally. If there is an instant at which all the zero-cross switches 2 happen to be turned off, at that instant, the impedance of the whole indoor power distribution system is infinite, and current does not flow. If there is an instant at which all the zero-cross switches 2 happen to be turned on, at that instant, the impedance of the whole indoor power distribution system is at a minimum, and the current flow is at a maximum.

As described above, the impedance of the whole indoor power distribution system also varies temporally. However, fluctuations of the voltage applied to the indoor power distribution system can be absorbed by the series-connected capacitor C2.

Each of the series-connected capacitors C2 functions as a current-limiting impedance element in each of the series-connection type controlled switching circuits B to reduce current fluctuations. The current-limiting function of the series-connected capacitor C2 makes it possible to mitigate the phenomenon of excessive current flow causing distortion of the voltage waveform that occurs when the instantaneous value of the supply voltage is high.

As is the case with the indoor power distribution system of Fig. 1, high frequency voltage and high frequency current generated at turn on and turn off of the switches can be reduced. Generation of electromagnetic waves can therefore be suppressed, thereby preventing electromagnetic interference.

### <Indoor power distribution system 3>

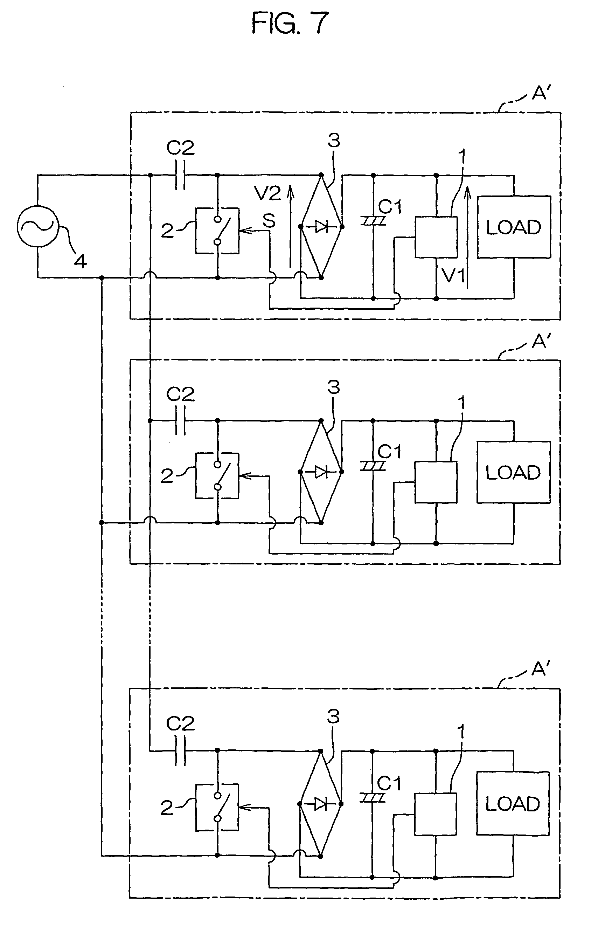

Fig. 7 is a wiring diagram of an indoor power distribution system according to still another embodiment of the invention. This indoor power distribution system comprises a plurality of parallel-connection type controlled switching circuits A', A',...that are connected in parallel with an AC power supply 4.

Each of the parallel-connection type controlled switching circuits A' comprises the combination of a series-connected capacitor C2, a parallel-connected zero-cross switch 2, a rectifying circuit 3, a smoothing capacitor C1 and a load. Switching of the zero-cross switch 2 is effected by a control circuit 1.

The voltage of the smoothing capacitor C1, i.e., the voltage applied to the load is represented by V1, and the voltage applied to the input of the rectifying circuit 3 is represented by V2.

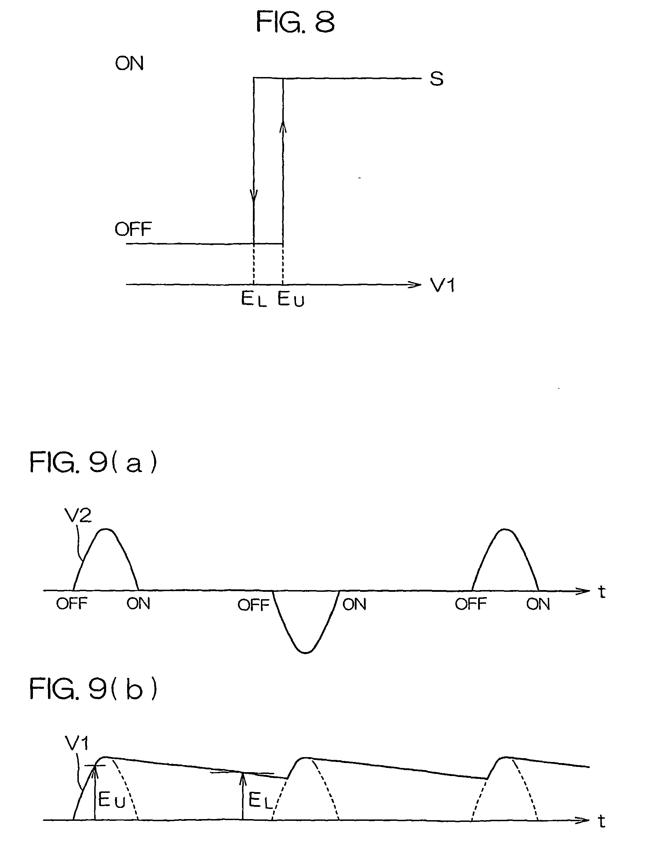

Fig. 8 shows an operating characteristic of the control circuit 1. The operation shown here is the same as the operation of the control circuit 1 described referring to Fig. 2.

Fig. 9 (a) is a waveform diagram of the voltage V2, and Fig. 9 (b) is a waveform diagram of the voltage V1. These waveforms are the same as the waveforms of the voltages V2 and V1, respectively, described referring to Fig. 3.

By the control shown in Figs. 8 and 9, the voltage V1 applied to the load can be maintained between predetermined values EU and EL.

Because of the operation of the zero-cross switch 2, the impedance of the parallel-connection type controlled switching circuit A' varies temporally. It is the impedance of the series-connected capacitor C2 when the zero-cross switch 2 is on, and at a value that depends on the impedances of the series-connected capacitor C2 and the load when the zero-cross switch 2 is off.

Accordingly, the impedance of the whole indoor power distribution system also varies temporally. However, fluctuations of the voltage applied to the indoor power distribution system can be absorbed by the series-connected capacitor C2.

The function of the series-connected capacitors C2 as a current-limiting impedance element makes it possible to mitigate the phenomenon of excessive current flow causing distortion of the voltage waveform that occurs when the instantaneous value of the supply voltage is high.

In addition, high frequency voltage and high frequency current generated at turn on and turn off of the switches can be reduced. Generation of electromagnetic waves can therefore be suppressed, thereby preventing electromagnetic interference.

While specific embodiments of the present invention have been described so far, implementation of the present invention is not limited to those embodiments. For example, loads that operate on alternating current (loads including induction motors such as washing machines, refrigerators, etc.) may be used as the loads. In such a case, the aforementioned rectifying circuit is no longer necessary. Besides these, various other modifications may be made within the scope of the present invention.

## Claims

1. An indoor power distribution system comprising an AC power supply that operates at a commercial frequency (4), a plurality of parallel-connection type controlled switching circuit (A) which are each connected in series with the AC power supply (4), and loads connected to the respective parallel-connection type controlled switching circuits (A),
wherein a second capacitor (C2) is connected in series between the AC power supply (4) and the parallel-connection type controlled switching circuit (A) or between the parallel-connection type controlled switching circuits (A);
each of the parallel-connection type controlled switching circuits (A) is a circuit comprising a first capacitor (1) and a switch (2) connected in parallel with each other;
the loads are each connected in parallel with the first capacitor (C1); and
each of the parallel-connection type controlled switching circuits (A) includes a control circuit (1) which controls the switch (2) to close when the voltage applied to the load becomes higher than a first predetermined value, and to open when the voltage applied to the load becomes lower than a second predetermined value that is lower than the first predetermined value.

2. An indoor power distribution system comprising an AC power supply that operates at a commercial frequency (4), a plurality of series-connection type controlled switching circuits (B) which are each connected in parallel with the AC power supply (4) and loads connected to the respective series-connection type controlled switching circuits (B),
wherein each of the series-connection type controlled switching circuits (B) is a circuit comprising a second capacitor (C2), a switch (2), and a first capacitor (C1) that are connected in series with one another;
the loads are each connected in parallel with the first capacitor (C1); and
each of the series-connection type controlled switching circuit (B) includes a control circuit (1) which controls the switch (2) to open when the voltage applied to the load becomes higher than a first predetermined value, and to close when the voltage applied to the load becomes lower than a second predetermined value that is lower than the first predetermined value.

3. An indoor power distribution system comprising an AC power supply that operates at a commercial frequency (4), a plurality of parallel-connection type controlled switching circuits (A') which are each connected in parallel with the AC power supply (4), and loads connected to the respective parallel-connection type controlled switching circuits (A')
wherein each of the parallel-connection type controlled switching circuits (A') is a circuit comprising a first capacitor (C1), a switch (2) connected in parallel with the first capacitor (C1) and a second capacitor (C2) connected in series therewith;
the loads are each connected in parallel with the first capacitor (C1); and
each of the parallel-connection type controlled switching circuits (A') includes a control circuit (1) which controls the switch (2) to close when the voltage applied to the load becomes higher than a first predetermined value, and to open when the voltage applied to the load becomes lower than a second predetermined value that is lower than the first predetermined value.

4. The indoor power distribution system according to any of claims 1 to 3, wherein the switch (2) is a zero-cross switch.

5. The indoor power distribution system according to any of claims 1 to 3, wherein a rectifying circuit (3) for providing direct current supply to the load is interposed between the switch (2) and the first capacitor (C1).

## Patentansprüche

1. Innenraum-Stromverteilungssystem, das folgendes aufweist:
- eine Wechselstromversorgung (4), die bei einer kommerziellen Frequenz arbeitet,
- eine Vielzahl von gesteuerten Schaltkreisen (A) vom Parallelschaltungs-Typ, die mit der Wechselstromversorgung (4) jeweils in Reihe geschaltet sind, sowie
- Lasten, die mit den jeweiligen gesteuerten Schaltkreisen (A) vom Parallelschaltungs-Typ verbunden sind,
wobei ein zweiter Kondensator (C2) zwischen der Wechselstromversorgung (4) und dem gesteuerten Schaltkreis (A) vom Parallelschaltungs-Typ oder zwischen den gesteuerten Schaltkreisen (A) vom Parallelschaltungs-Typ in Reihe geschaltet ist;
wobei es sich bei jedem der gesteuerten Schaltkreise (A) vom Parallelschaltungs-Typ um eine Schaltung handelt, die einen ersten Kondensator (C1) und einen Schalter (2) in Parallelschaltung zueinander aufweist;
wobei die Lasten mit dem ersten Kondensator (C1) jeweils parallelgeschaltet sind; und
wobei jeder der gesteuerten Schaltkreise (A) vom Parallelschaltungs-Typ eine Steuerschaltung (1) aufweist, die den Schalter (2) zum Schließen steuert, wenn die an die Last angelegte Spannung höher wird als ein erster vorbestimmter Wert, sowie den Schalter (2) zum Öffnen steuert, wenn die an die Last angelegte Spannung niedriger wird als ein zweiter vorbestimmter Wert, der niedriger ist als der erste vorbestimmte Wert.

2. Innenraum-Stromverteilungssystem, das folgendes aufweist:
- eine Wechselstromversorgung (4), die bei einer kommerziellen Frequenz arbeitet,
- eine Vielzahl von gesteuerten Schaltkreisen (B) vom Reihenschaltungs-Typ, die mit der Wechselstromversorgung (4) jeweils parallelgeschaltet sind, sowie
- Lasten, die mit den jeweiligen gesteuerten Schaltkreisen (B) vom Reihenschaltungs-Typ verbunden sind,
wobei es sich bei jedem der gesteuerten Schaltkreise (B) vom Reihenschaltungs-Typ um eine Schaltung handelt, die einen zweiten Kondensator (C2), einen Schalter (2) und einen ersten Kondensator (C1) aufweist, die in Reihe miteinander geschaltet sind;
wobei die Lasten mit dem ersten Kondensator (C1) jeweils parallelgeschaltet sind; und
wobei jeder der gesteuerten Schaltkreise (B) vom Reihenschaltungs-Typ eine Steuerschaltung (1) aufweist, die den Schalter (2) zum Öffnen steuert, wenn die an die Last angelegte Spannung höher wird als ein erster vorbestimmter Wert, sowie den Schalter (2) zum Schließen steuert, wenn die an die Last angelegte Spannung niedriger wird als ein zweiter vorbestimmter Wert, der niedriger ist als der erste vorbestimmte Wert.

3. Innenraum-Stromverteilungssystem, das folgendes aufweist:
- eine Wechselstromversorgung (4), die bei einer kommerziellen Frequenz arbeitet,
- eine Vielzahl von gesteuerten Schaltkreisen (A') vom Parallelschaltungs-Typ, die mit der Wechselstromversorgung (4) jeweils parallelgeschaltet sind, sowie
- Lasten, die mit den jeweiligen gesteuerten Schaltkreisen (A') vom Parallelschaltungs-Typ verbunden sind,
wobei es sich bei jedem der gesteuerten Schaltkreise (A') vom Parallelschaltungs-Typ um eine Schaltung handelt, die einen ersten Kondensator (C1), einen mit dem ersten Kondensator (C1) parallelgeschalteten Schalter (2) und einen mit dem ersten Kondensator (C1) in Reihe geschalteten zweiten Kondensator (C2) aufweist; wobei die Lasten mit dem ersten Kondensator (C1) jeweils parallelgeschaltet sind; und
wobei jeder der gesteuerten Schaltkreise (A') vom Parallelschaltungs-Typ eine Steuerschaltung (1) aufweist, die den Schalter (2) zum Schließen steuert, wenn die an die Last angelegte Spannung höher wird als ein erster vorbestimmter Wert, sowie den Schalter (2) zum Öffnen steuert, wenn die an die Last angelegte Spannung niedriger wird als ein zweiter vorbestimmter Wert, der niedriger ist als der erste vorbestimmte Wert.

4. Innenraum-Stromverteilungssystem nach einem der Ansprüche 1 bis 3, wobei es sich bei dem Schalter (2) um einen Nulldurchgangsschalter handelt.

5. Innenraum-Stromverteilungssystem nach einem der Ansprüche 1 bis 3, wobei eine Gleichrichterschaltung (3), die eine Gleichstromversorgung für die Last bildet, zwischen dem Schalter (2) und dem ersten Kondensator (C1) angeordnet ist.

## Revendications

1. Système de distribution d'énergie intérieur, comprenant:
- une alimentation en courant alternatif qui fonctionne à une fréquence commerciale (4),
- une pluralité de circuits de commutation commandés du type à connexion en parallèle (A) qui sont chacun connectés en série à l'alimentation en courant alternatif (4), et
- des charges connectées aux circuits de commutation commandés du type à connexion en parallèle (A) respectifs;
dans lequel un deuxième condensateur (C2) est connecté en série entre l'alimentation en courant alternatif (4) et le circuit de commutation commandé du type à connexion en parallèle (A) ou entre les circuits de commutation commandés du type à connexion en parallèle (A); chacun des circuits de commutation commandés du type à connexion en parallèle (A) est un circuit qui comprend un premier condensateur (C1) et un commutateur (2) connectés en parallèle l'un avec l'autre;
les charges sont chacune connectées en parallèle avec le premier condensateur (C1); et
chacun des circuits de commutation commandés du type à connexion en parallèle (A) comprend un circuit de commande (1) qui commande le commutateur (2) pour qu'il se ferme lorsque la tension appliquée à la charge devient supérieure à une première valeur prédéterminée, et pour qu'il s'ouvre lorsque la tension appliquée à la charge devient inférieure à une deuxième valeur prédéterminée qui est inférieure à la première valeur prédéterminée.

2. Système de distribution d'énergie intérieur, comprenant:
- une alimentation en courant alternatif qui fonctionne à une fréquence commerciale (4),
- une pluralité de circuits de commutation commandés du type à connexion en série (B) qui sont chacun connectés en parallèle à l'alimentation en courant alternatif (4), et
- des charges connectées aux circuits de commutation commandés du type à connexion en série (B) respectifs;
dans lequel chacun des circuits de commutation commandés du type à connexion en série (B) est un circuit qui comprend un deuxième condensateur (C2), un commutateur (2) et un premier condensateur (C1) qui sont connectés en série les uns avec les autres;
les charges sont chacune connectées en parallèle avec le premier condensateur (C1); et
chacun des circuits de commutation commandés du type à connexion en série (B) comprend un circuit de commande (1) qui commande le commutateur (2) pour qu'il s'ouvre lorsque la tension appliquée à la charge devient supérieure à une première valeur prédéterminée, et pour qu'il se ferme lorsque la tension appliquée à la charge devient inférieure à une deuxième valeur prédéterminée qui est inférieure à la première valeur prédéterminée.

3. Système de distribution d'énergie intérieur, comprenant:
- une alimentation en courant alternatif qui fonctionne à une fréquence commerciale (4),
- une pluralité de circuits de commutation commandés du type à connexion en parallèle (A') qui sont chacun connectés en parallèle à l'alimentation en courant alternatif (4), et
- des charges connectées aux circuits de commutation commandés du type à connexion en parallèle (A') respectifs;
dans lequel chacun des circuits de commutation commandés du type à connexion en parallèle (A') est un circuit qui comprend un premier condensateur (C1), un commutateur (2) connecté en parallèle avec le premier condensateur (C1) et un deuxième condensateur (C2) connecté en série avec celui-ci;
les charges sont chacune connectées en parallèle avec le premier condensateur (C1); et
chacun des circuits de commutation commandés du type à connexion en parallèle (A') comprend un circuit de commande (1) qui commande le commutateur (2) pour qu'il se ferme lorsque la tension appliquée à la charge devient supérieure à une première valeur prédéterminée, et pour qu'il s'ouvre lorsque la tension appliquée à la charge devient inférieure à une deuxième valeur prédéterminée qui est inférieure à la première valeur prédéterminée.

4. Système de distribution d'énergie intérieur selon l'une quelconque des revendications 1 à 3,
dans lequel le commutateur (2) est un dispositif de commutation au passage à zéro.

5. Système de distribution d'énergie intérieur selon l'une quelconque des revendications 1 à 3,
dans lequel un circuit de redressement (3) destiné à fournir une alimentation en courant continu à la charge, est interposé entre le commutateur (2) et le premier condensateur (C1).
